(19) Europäisches Patentamt
European Patent Office
Office européen des brevets

(11) Veröffentlichungsnummer : **0 374 659 B1**

(12) **EUROPÄISCHE PATENTSCHRIFT**

(45) Veröffentlichungstag der Patentschrift :
**25.01.95 Patentblatt 95/04**

(51) Int. Cl.[6] : **G02B 1/04,** C08L 83/07

(21) Anmeldenummer : **89122779.5**

(22) Anmeldetag : **09.12.89**

# (54) Optisch klare Silikonmassen.

(30) Priorität : **23.12.88 DE 3843411**

(43) Veröffentlichungstag der Anmeldung :
**27.06.90 Patentblatt 90/26**

(45) Bekanntmachung des Hinweises auf die Patenterteilung :
**25.01.95 Patentblatt 95/04**

(84) Benannte Vertragsstaaten :
**AT BE CH DE ES FR GB GR IT LI LU NL SE**

(56) Entgegenhaltungen :
**EP-A- 0 158 459**
**EP-A- 0 317 377**
**DE-A- 3 532 686**
**GB-A- 1 188 058**
**US-A- 4 882 398**

(73) Patentinhaber : **BAYER AG**
**D-51368 Leverkusen (DE)**

(72) Erfinder : **Schwabe, Peter, Dr.**
**Dudweiler Strasse 17**
**D-5090 Leverkusen (DE)**
Erfinder : **Voigt, Reiner, Dr.**
**An der Lichtenburg 4**
**D-5090 Leverkusen (DE)**
Erfinder : **Schlak, Ottfried, Dr.**
**Kalkweg 2**
**D-5000 Koeln 80 (DE)**
Erfinder : **Geyer, Otto-Christian, Dr.**
**Ulmenweg 9**
**D-6333 Braunsfeld (DE)**

**EP 0 374 659 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die vorliegende Erfindung betrifft optisch klare Massen auf Polysiloxanbasis, die insbesondere für die Herstellung von kontaktoptischen Gegenständen wie Kontaktlinsen, Skleralschalen und Intraokularlinsen eingesetzt werden.

Das Spektrum der eingesetzten Kunststoffe in der Kontaktoptik hat sich von Jahr zu Jahr erweitert. Es wurden Kontaktlinsen aus den verschiedensten Materialien entwickelt, z.B. aus PMMA, GAB (Celluloseacetatbutyrat), Copolymerisaten des Vinylpyrrolidons usw.

Verbesserungen der Materialzusammensetzung, verbunden mit neuen Linsenformen haben die Anwendung von Kontaktlinsen weltweit außerordentlich begünstigt. Insbesondere bei hoch wasserhaltigen Linsen wird bei gutem Flüssigkeitsaustausch optimale Gaspermeabilität erreicht. Die Linsen zeichnen sich durch hervorragende subjektive Verträglichkeit aus. Für alle höher wasserhaltigen Kontaktlinsen müssen aber auch Nachteile wie Auf- und Einlagerungen von Tränenfilmbestandteilen, insbesondere von Proteinen, mit möglichen allergischen Reaktionen in Kauf genommen werden. Auch sind bei bestimmten Konservierungsstoffen in Reinigungs-, Benetzungs- und Aufbewahrlösungen Überempfindlichkeitsreaktionen nicht auszuschließen.

In der optischen Qualität ist die hochhydrophile Linse der harten Linse unterlegen.

Es lag nahe, nach einem weichen Kunststoff zu suchen, dessen optische Eigenschaften derjenigen harter Linsen entsprechen, einem Material, das sich Tränenflüssigkeit, Bakterien und Viren gegenüber indifferent zeigt, darüber hinaus gute physiologische Verträglichkeit aufweist und eine hohe Gasdiffusion besitzt. Es bot sich Silikon-Kautschuk an.

Die für eine gute Augenverträglichkeit erforderliche Oberflächenbenetzung des hydrophoben Silikon-Kautschuk-Materials wurde durch Änderung der Molekular-Struktur der Linsenoberfläche erreicht (z.B. energiereiche Strahlung oder Elektronenbeschuß im Vakuum). Silikon-Linsen sind an sich bereits seit langem bekannt, aber schon bald stellte sich heraus, daß z.B. die Aufrechterhaltung der Oberflächenbenetzung nur sehr begrenzt ist. Auch weitere Eigenschaften der Silikon-Linsen sind noch verbesserungsbedürftig.

Die vorliegende Erfindung betrifft nun bestimmte additionsvernetzende Vinylsilikonmischungen zur Herstellung von kontaktoptischen Gegenständen, insbesondere von Kontaktlinsen, Skleralschalen und Intraokularlinsen. Hierbei handelt es sich um ein kaltvulkanisierendes Zweikomponenten-Silikonkautschuk-System, bei dem die vernetzerhaltige Basismischung mit einer Katalysatormischung vermengt wird und bei Raumtemperatur bzw. bei besonders langer Einstellung der Tropfzeit durch einen Wärmestoß (in der Größenordnung von ca. 50 - 150°C) vernetzt wird.

Zweikomponenten-Silikonkautschuk-Systeme, die auf Basis vinyl- und SiH-gruppenhaltiger Polydimethylsiloxane durch Additionsreaktion vernetzen, sind seit vielen Jahren bekannt und werden z.B. als Abform- und Dubliermassen im Dentalbereich verwandt.

Diese Massen bestehen aus einer Silikonpolymer und Vernetzer enthaltenden Basiskomponente und einer Katalysatorkomponente aus Silikonpolymer, Katalysator und Inhibitor Bei dem Silikonpolymer handelt es sich überwiegend um ein vinylendgestopptes Polydimethylsiloxan, der Vernetzer enthält reaktive SiH-Gruppen und der Katalysator besteht aus Platin bzw. einem Platinkomplex. Durch gezielte Aufteilung von Silikonpolymeren mit unterschiedlichen Viskositäten können Basis- und Katalysatorkomponente auf gleiche Viskosität eingestellt werden. Diese beiden Komponenten sind vor Anwendung in einem bestimmten Gewichts- oder Volumenverhältnis zu mischen.

Die Ausgangssubstanzen wie vinylhaltige Silikonpolymere, trimethylsiloxyendgestoppte Polydimethylsiloxane und SiH-gruppenhaltige Polysiloxane (Vernetzersubstanzen) werden in an sich bekannter Weise hergestellt (vgl. z.B. W. Noll, Chemie und Technologie der Silikone, Verlag Chemie, Weinheim, 2. Aufl. 1964, S. 162 - 206).

Silikonpolymere, die durch Vakuumausheizung im Dünnschicht- oder Fallfilmverdampfer einen niedrigen Gehalt an Oligomeren aufweisen sind in DE-A-3 532 686 beschrieben.

Bei den vinylhaltigen Silikonpolymeren handelt es sich im allgemeinen um vinylendgestoppte Polydimethylsiloxane, also lineare Polymere. Ebenso können die SiH-gruppenhaltigen Vernetzer linear sein. Verzweigungen, also ein Netzwerk, erhält man bei Vernetzung mittels Platin-Katalysator, wenn der Vernetzer nicht nur endständig, sondern auch in der Kette SiH-Gruppen aufweist. Doch die Engmaschigkeit des Netzwerkes ist hierbei begrenzt, da die SiH-Gruppen-Dichte sinnvollerweise begrenzt bleiben muß. Bei einem hohen Gehalt an vicinalen SiH-Gruppen im Vernetzermolekül können viele dieser SiH-Gruppen mit den Vinylgruppen infolge sterischer Hinderung nicht reagieren. Statt der erhofften Verbesserung der Gummi-Eigenschaften erzielt man genau das Gegenteil, nämlich Untervernetzung und Weichmacher-Effekt.

Es war also wünschenswert, die aus DE-A-3 532 686 bekannten Materialien in ihren mechanischen Eigenschaften zu verbessern. Überraschenderweise wurde nun gefunden, daß diese Materialien durch den Zusatz von 1 - 10 Gew.%, vorzugsweise 1,5 - 5 Gew.% von niedermolekularen vinylgruppenhaltigen QM-Harzen

deutlich in ihren mechanischen Eigenschaften wie Härte, Reißfestigkeit und Bruchdehnung verbessert werden, ohne daß ihre optischen Eigenschaften dadurch gemindert werden.

Darüber hinaus bietet der Zusatz von QM-Harzen weiterhin den Vorteil, daß damit der Brechungsindex der optisch klaren Silikonmassen variiert werden kann.

Diese QM-Harze sind dadurch gekennzeichnet, daß sie, wie in o.g. Buch von W. Noll, Seite 3 erklärt, als Q-Einheiten das tetrafunktionelle $SiO_{4/2}$ und als M-Bausteine das monofunktianelle $R_3SiO_{1/2}$, wobei R Vinyl-, Methyl-, Ethyl-, Phenyl sein kann, enthalten. Darüber hinaus können auch noch als T-Einheiten das trifunktionelle $RSiO_{3/2}$ und als D-Einheiten das bifunktionelle $R_2SiO_{2/2}$ mit der gleichen Bedeutung für R wie oben vorhanden sein. Der erfindungsgemäße Gehalt von 1 - 10 Gew.% QM-Harz, vorzugsweise 1,5 - 5 Gew.% QM-Harz im gesamten Silikonsystem bewirkt eine deutliche Verbesserung der Vernetzungsdichte und damit eine höhere Reißfestigkeit und Härte des elastomeren Produktes.

Gegenstand der vorliegenden Erfindung sind zu Elastomeren härtbare, optisch klare Silikonmassen enthaltend

a) vinylendgestoppte Polydimethylsiloxane einer Viskosität von etwa 200 - 100.000 mPa·s (bei 20°C) mit zwei oder mehr Vinylgruppen im Molekül,
b) gegebenenfalls Organopolysiloxane ohne reaktive Gruppen,
c) Organopolysiloxane mit zwei oder mehr SiH-Gruppen im Molekül,
d) Katalysator,
e) Inhibitor sowie gegebenenfalls weitere übliche Zusatz- und Hilfsstoffe,

dadurch gekennzeichnet,

- daß die Silikonmassen zusätzlich ein niedermolekulares, Vinyl- und Ethoxygruppenhaltiges, in a) homogen lösliches QM-Harz enthalten, welches einen Vinylgruppengehalt von 0,5 - 8 mMol/g besitzt, aus $SiO_{4/2}$-, $RO_{1/2}$- und $R_3SiO_{1/2}$-Einheiten besteht und R für eine Methyl-, Vinyl-, Phenyl- und Ethyl-Gruppe steht und einen Ethoxygruppengehalt von 0,2 - 3 mMol/g aufweist, im Endprodukt zu 1 - 10 Gew.-% enthalten ist und eine Viskosität von 150 bis 1.500 mPa·s aufweist,
- daß der Katalysatorgehalt - gerechnet als Metall - weniger als 5 ppm (bezogen auf Gesamtgemisch) beträgt,
- daß der SiH-Gruppengehalt von 0,05 bis 0,8 mMol/g (bezogen auf Gesamtgemisch) beträgt,
- daß als Inhibitoren Organopolysiloxane enthaltend 0,5 bis 11,6 mmol Vinyl/g eingesetzt werden,
- daß das spezifische Gewicht der härtbaren Massen weniger als 1,0 beträgt und
- daß die Massen gegebenenfalls zusätzlich 0 - 30 Gew.% verzweigte, gesättigte C15 - C50-Kohlenwasserstoffe, bevorzugt Isoparaffine, enthalten.

Als Ausgangsstoffe für den Erfindungsgegenstand werden an sich bekannte Materialien, wie sie in der Silikon-Technologie üblich sind, eingesetzt.

Die vinylendgestoppten Polydimethylsiloxane weisen eine Viskosität von etwa 200 - 100 000 mPa.s (bei 20° ) auf, die SiH-haltigen Polysiloxane haben SiH-Gehalte von 0,1 -10 mMol/g und eine Viskosität von etwa 50 - 500 mPa.s (bei 20°C). Die erfindungsgemäß eingesetzten QM-Harze sind an sich bekannt. Ihre Herstellung ist z.B. in den US PS 2 676 182, 2 857 356 und 3 527 659 beschrieben.

Wesentlich für den erfindungsgemäßen Einsatz ist,

- daß die QM-Harze so niedermolekular sind, daß sie in den vinylendgestoppten Polydimethylsiloxanen optisch klar gelöst sind und ihre Abmischungen zu optisch klaren Endprodukten führen. In der Regel weisen derartige QM-Harze eine Viskosität von 150 bis 1500 mPa.s auf;
- daß der SiOH-Gehalt der QM-Harze so gering ist, daß keine optischen Störungen durch Blasen von freigesetztem Wasserstoffgas entstehen können;
- daß der Gehalt an flüchtigen und/oder nicht reaktiven Molekülen so gering ist, daß die Dimensionsstabilität der Formkörper nicht gemindert wird; und daß die QM-Harze einen Vinylgehalt von 0,5 bis 8 mMol/g und einen Ethoxy-Gehalt von 0,2 bis 3 mMol/g aufweisen.

Der Gehalt an flüchtigen Oligomeren, gemessen wie in DE-A 3 532 686 beschrieben, sollte nicht mehr als 0,8 Gew.-% betragen.

Das Verhältnis der Summe aus $R_3SiO_{1/2}$- und $EtO_{1/2}$-Einheiten zu den $SiO_{4/2}$-Einheiten soll dabei kleiner als 2,5 sein und wird nach unten begrenzt durch die optisch klare Löslichkeit der QM-Harze in den vinylendgestoppten Polydimethylsiloxanen, bzw. durch die optische Klarheit der Endprodukte.

Die QM-Harze können darüber hinaus geringe Anteile an $R_2SiO$- und $RSiO_{3/2}$-Einheiten enthalten, ohne daß dies den erfindungsgemäßen Einsatz stört, jedoch sollen die $R_2SiO$- und $RSiO_{3/2}$-Einheiten in Summe 20 Mol% nicht überschreiten.

Ein bevorzugtes QM-Harz weist die Formel

$$[SiO_{4/2}]\,[(CH_3)_2CH_2{=}CHSiO_{1/2}]_{0,9-1,4}\,[C_2H_5O_{1/2}]_{0,4-0,5}$$

auf; besitzt einen Vinylgehalt van 5,5 - 6,5 mMol/g und eine Viskosität von 500 - 800 mPa.s bei 23°C.

Die trimethylsilyl-endgestoppten Siloxane weisen Viskositäten von etwa 100 - 1 000 mPa.s (bei 20°C) auf.

Die zu verwendenden Polysiloxane werden, wie in DE A 3 532 686 beschrieben, von Oligomeren befreit und weisen einen Oligomerengehalt von <0,8 Gew.% auf.

Als Katalysatoren werden übliche Pt-Verbindungen bzw. Komplexe wie z.B. Hexachlorplatinsäure oder Pt-Komplexe mit Vinylsiloxanen eingesetzt.

Die Herstellung der Massen bzw. der Linsen erfolgt in an sich bekannter Weise und Verarbeitung zu Kontaktlinsen kann z.B. mit Hilfe von Schleudergußverfahren ("spin cast") oder durch Eingießen in Formen und anschließendes Aushärten durchgeführt werden.

Das erfindungsgemäße Material kann auch intraokular angewandt werden. Dazu kann in einfacher Weise die noch flüssige Masse ins Innere des Auges gebracht werden und härtet dann aus.

Der Gegenstand der Erfindung soll nun anhand der folgenden Beispiele noch näher erläutert werden (Teile sind - soweit nichts anderes vermerkt ist - Gewichtsteile).

Beispiel 1 (erfindungsgemäß)

In einem Mischer wird eine Basiskomponente hergestellt durch Vermischen von 7 Teilen vinylendgestapptem Polydimethylsiloxan mit einer Viskosität von 1 000 mPa.s (a), 10 Teilen vinylendgestopptem Polydimethylsiloxan mit einer Viskosität van 10 000 mPa.s (b), 11 Teilen vinylendgestapptem Polydimethylsilaxan mit einer Viskosität van 50 000 mPa.s (c) und 12 Teilen SiH-gruppenhaltigem Polydimethylsiloxan mit einer Viskosität von 200 mPa.s und 2,5 mMol SiH/g.

Eine Katalysatorkomponente wird in einem Mischer hergestellt durch Vermischen von 19 Teilen (a), 10 Teilen (b), 9 Teilen (c), 2 Teilen QM-Harz der Formel

$$[SiO_{4/2}]\ [Me_2ViSiO_{1/2}]_{1,0}\ [EtO_{1/2}]_{0,4}$$

mit einer Viskosität von 800 mPa.s, 0,02 Teilen eines Komplexes aus Platin und Tetramethyldivinyldisiloxan als Katalysator und 0,05 Teilen Tetravinyltetramethyltetrasiloxan als Inhibitor.

Beim Vermischen der Basiskomponente mit der Katalysatorkomponente gewichtsmäßig 1:1 entsteht ein SiH : SiVi-Verhältnis von 1,77 : 1.

Beispiel 2 (Vergleich)

In einem Mischer wird eine Basiskomponente hergestellt durch Vermischen von 11,2 Teilen (a), 10 Teilen (b), 10 Teilen (c) und 3,5 Teilen SiH-gruppenhaltigem Polysiloxan aus Beispiel 1.

Eine Katalysatorkomponente wird in einem Mischer hergestellt aus 14,8 Teilen (a), 10 Teilen (b), 10 Teilen (c), 0,02 Teilen Platin-Katalysator aus Beispiel 1 und 0,05 Teilen Inhibitor aus Beispiel 1.

Beim Vermischen der Basiskomponente mit der Katalysatorkomponente, gewichtsmäßig 1 : 1, entsteht ein SiH SiVi-Verhältnis von 1,74 : 1.

Beispiel 3 (Vergleich aus DE-A 3 532 686)

In einem Mischer wird eine Basiskomponente hergestellt durch Vermischen von 35 Teilen vinylendgestopptem Polydimethylsiloxan mit einer Viskosität von 65 000 mPa.s, 30 Teilen vinylendgestopptem Polydimethylsiloxan mit einer Viskosität von 1 000 mPa.s und 35 Teilen SiH-gruppenhaltigem Polydimethylsiloxan mit einer Viskosität von 95 mPa.s und 1,0 mMol SiH/g.

Die Katalysatorkomponente wird in einem Mischer hergestellt durch Vermischen von 35 Teilen vinylendgestopptem Polydimethylsilaxan mit einer Viskosität von 65 000 mPa.s, 65 Teilen vinylendgestopptem Polydimethylsiloxan mit einer Viskosität van 1 000 mPa.s, 0,2 Teilen eines Platin-Siloxan-Komplexes und 0,05 Teilen Tetravinyltetramethyldisiloxan.

Beim Vermischen der Basiskomponente mit der Katalysatarkomponente, gewichtsmäßig 1:1, entsteht ein SiH : SiVi-Verhältnis von 2,33 : 1.

Beispiel 4

Die Basiskomponenten wurden mit der jeweiligen Katalysatorkomponente gewichtsmäßig 1 : 1 unter Vakuum gemischt, Die Mischungen wurden blasenfrei in Formen mit dem Negativ eines Prüfstabes nach DIN 53 504 und in Formen von 1 cm Durchmesser und 1 cm Tiefe gegossen und 30 Minuten bei 120°C vernetzt. An den runden Prüfkörpern wurde die Härte nach Shore A gemessen, an den Prüfstäben in Anlehnung an DIN 53 504 die Reißfestigkeit in $N/mm^2$ und Bruchdehnung in % gemessen.

| Beispiel | Shore A | Reißfestigkeit [N/mm²] | Bruchdehnung [%] |
|---|---|---|---|
| 1 | 29 | 1,9 | 200 |
| 2 | 19 | 0,5 | 180 |
| 3 | 17 | 0,4 | 170 |

Die aus diesen Materialien hergestellten Kontaktlinsen entsprechen hinsichtlich der Radienstabilität (gemäß DIN 58224) den Anforderungen, zeigen eine hervorragende biologische Verträglichkeit und besitzen eine sehr gute Gewichtskonstanz.

## Patentansprüche

### Patentanprüche für folgende Vertragsstaaten : AT, BE, CH, DE, FR, GB, GR, IT, LI, LU, NL, SE

1. Zu Elastomeren härtbare, optische klare Silikonmassen enthaltend
   a) vinylendgestoppte Polydimethylsiloxane einer Viskosität von etwa 200 - 100.000 mPa·s (bei 20°C) mit zwei oder mehr Vinylgruppen im Molekül,
   b) gegebenenfalls Organopolysiloxane ohne reaktive Gruppen,
   c) Organopolysiloxane mit zwei oder mehr SiH-Gruppen im Molekül,
   d) Katalysator,
   e) Inhibitor sowie gegebenenfalls weitere übliche Zusatz- und Hilfsstoffe,
   dadurch gekennzeichnet,
   - daß die Silikonmassen zusätzlich ein niedermolekulares, Vinyl- und Ethoxygruppenhaltiges, in a) homogen lösliches QM-Harz enthalten, welches einen Vinylgruppengehalt von 0,5 - 8 mMol/g besitzt, aus $SiO_{4/2}$-, $RO_{1/2}$- und $R_3SiO_{1/2}$-Einheiten besteht und R für eine Methyl-, Vinyl-, Phenyl- und Ethyl-Gruppe steht und einen Ethoxygruppengehalt von 0,2 - 3 mMol/g aufweist, im Endprodukt zu 1 - 10 Gew.-% enthalten ist und eine Viskosität von 150 bis 1.500 mPa·s aufweist,
   - daß der Katalysatorgehalt - gerechnet als Metall - weniger als 5 ppm (bezogen auf Gesamtgemisch) beträgt,
   - daß der SiH-Gruppengehalt von 0,05 bis 0,8 mMol/g (bezogen auf Gesamtgemisch) ist
   - daß als Inhibitoren Organopolysiloxane mit 0,5 bis 11,6 mmol Vinyl/g eingesetzt werden,
   - daß das spezifische Gewicht der härtbaren Massen weniger als 1,0 beträgt und
   - daß die Massen gegebenenfalls zusätzlich verzweigte, gesättigte Kohlenwasserstoffe mit 15 - 50 C-Atomen enthalten.

2. Masse gemäß Anspruch 1, dadurch gekennzeichnet, daß der Gehalt an QM-Harz 1,5 - 5 Gew.% beträgt.

3. Masse nach Ansprüchen 1 und 2, dadurch gekennzeichnet, daß der SiH-Gehalt 0,1 - 0,5 mMol/g beträgt.

4. Kontaktoptische Gegenstände hergestellt aus Massen gemäß Ansprüchen 1 bis 3.

5. Kontaktlinsen, hergestellt aus Massen gemäß Ansprüchen 1 bis 3.

6. Skleralschalen hergestellt aus Massen gemäß Ansprüchen 1 bis 3.

7. Intraokularlinsen hergestellt aus Massen gemäß Ansprüchen 1 bis 3.

8. Verwendung der Massen gemäß Ansprüchen 1 bis 3 zur Herstellung kontaktoptischer Gegenstände.

9. Verfahren zur Herstellung kontaktoptischer Gegenstände, dadurch gekennzeichnet, daß man Massen gemäß Ansprüchen 1 bis 3 in eine entsprechende Form einbringt, daß man die Masse bei Temperaturen von 20°C bis 150°C aushärten läßt und anschließend gegebenenfalls einer an sich bekannten Nachbe-

handlung unterwirft.

**Patentansprüche für folgenden Vertragsstaat : ES**

1. Verfahren zur Herstellung kontaktoptischer Gegenstände, dadurch gekennzeichnet, daß man zu Elastomeren härtbare, optische klare Silikonmassen enthaltend
   a) vinylendgestoppte Polydimethylsiloxane einer Viskosität von etwa 200 - 100.000 mPa·s (bei 20°C) mit zwei oder mehr Vinylgruppen im Molekül,
   b) gegebenenfalls Organopolysiloxane ohne reaktive Gruppen,
   c) Organopolysiloxane mit zwei oder mehr SiH-Gruppen im Molekül,
   d) Katalysator,
   e) Inhibitor sowie gegebenenfalls weitere übliche Zusatz- und Hilfsstoffe,

   dadurch gekennzeichnet,
   - daß die Silikonmassen zusätzlich ein niedermolekulares, Vinyl- und Ethoxygruppenhaltiges, in a) homogen lösliches QM-Harz enthalten, welches einen Vinylgruppengehalt von 0,5 - 8 mMol/g besitzt, aus $SiO_{4/2}$-, $RO_{1/2}$- und $R_3SiO_{1/2}$-Einheiten besteht und R für eine Methyl-, Vinyl-, Phenyl- und Ethyl-Gruppe steht und einen Ethoxygruppengehalt von 0,2 - 3 mMol/g aufweist, im Endprodukt zu 1 - 10 Gew.-% enthalten ist und eine Viskosität von 150 bis 1.500 mPa·s aufweist,
   - daß der Katalysatorgehalt - gerechnet als Metall - weniger als 5 ppm (bezogen auf Gesamtgemisch) beträgt,
   - daß der SiH-Gruppengehalt von 0,05 bis 0,8 mMol/g (bezogen auf Gesamtgemisch) ist
   - daß als Inhibitoren Organopolysiloxane mit 0,5 bis 11,6 mmol Vinyl/g eingesetzt werden,
   - daß das spezifische Gewicht der härtbaren Massen weniger als 1,0 beträgt und
   - daß die Massen gegebenenfalls zusätzlich verzweigte, gesättigte Kohlenwasserstoffe mit 15 - 50 C-Atomen enthalten,

   in eine entsprechende Form einbringt, die Masse bei Temperaturen von 20°C bis 150°C aushärten läßt und anschließend gegebenenfalls einer an sich bekannten Nachbehandlung unterwirft.

2. Kontaktoptische Gegenstände hergestellt gemäß Anspruch 1.

3. Kontaktlinsen hergestellt gemäß Anspruch 1.

4. Skleralschalen hergestellt gemäß Anspruch 1.

5. Intraokularlinsen hergestellt gemäß Anspruch 1.

**Claims**

**Claims for the following Contracting States : AT, BE, CH, LI, DE, FR, GB, GR, IT, LU, NL, SE**

1. Optically clear silicone compositions which can be cured to elastomers and contain
   a) vinyl-terminated polydimethylsiloxanes having a viscosity of about 200-100,000 mPa.s (at 20°C) with two or more vinyl groups in the molecule,
   b) optionally organopolysiloxanes without reactive groups,
   c) organopolysiloxanes with two or more SiH groups in the molecule,
   d) catalyst,
   e) inhibitor, and optionally further customary additives and auxiliaries,

   characterized in that
   - the silicone compositions additionally contain a low molecular weight QM resin which contains vinyl and ethoxy groups and is homogeneously soluble in a) and which has a vinyl group content of 0.5-8 mmol/g, consists of $SiO_{4/2}$, $RO_{1/2}$ and $R_3SiO_{1/2}$ units and R represents a methyl, vinyl, phenyl and ethyl group and has an ethoxy group content of 0.2-3 mmol/g, is present in the final product to the extent of 1-10% by weight and has a viscosity of 150 to 1500 mPa.s,
   - the catalyst content - calculated as metal - is less than 5 ppm (based on the total mixture),
   - the SiH group content is from 0.05 to 0.8 mmol/g (based on the total mixture),
   - organopolysiloxanes having a vinyl content of 0.5 to. 11.6 mmol/g are employed as inhibitors,
   - the specific gravity of the curable compositions is less than 1.0 and

- the compositions optionally additionally contain branched, saturated hydrocarbons with 15-50 C atoms.

2. Composition according to Claim 1, characterized in that the content of QM resin is 1.5-5% by weight.

3. Composition according to Claims 1. and 2, characterized in that the SiH content is 0.1-0.5 mmol/g.

4. Contact optical articles produced from compositions according to Claims 1 to 3.

5. Contact lenses produced from compositions according to Claims 1 to 3.

6. Scleral lenses produced from compositions according to Claims 1 to 3.

7. Intraocular lenses produced from compositions according to Claims 1 to 3.

8. Use of the compositions according to Claims 1 to 3 for the production of contact optical articles.

9. Process for the production of contact optical articles, characterized in that compositions according to Claims 1 to 3 are introduced into an appropriate mould, in that the composition is left to cure at temperatures of 20°C to 150°C and then optionally subjected to an after-treatment known per se.

**Claims for the following Contracting State : ES**

1. Process for the production of contact optical articles, characterized in that optically clear silicone compositions which can be cured to elastomers and contain
   a) vinyl - terminated polydimethylsiloxanes having a viscosity of about 200-100,000 mPa.s (at 20°C) with two or more vinyl groups in the molecule,
   b) optionally organopolysiloxanes without reactive groups,
   c) organopolysiloxanes with two or more SiH groups in the molecule,
   d) catalyst,
   e) inhibitor, and optionally further customary additives and auxiliaries,

   characterized in that
   - the silicone compositions additionally contain a low molecular weight QM resin which contains vinyl and ethoxy groups and is homogeneously soluble in a) and which has a vinyl group content of 0.5-8 mmol/g, consists of $SiO_{4/2}$, $RO_{1/2}$ and $R_3SiO_{1/2}$ units, and R represents a methyl, vinyl, phenyl and ethyl group and has an ethoxy group content of 0.2-3 mmol/g, is present in the final product to the extent of 1-10% by weight and has a viscosity of 150 to 1500 mPa.s,
   - the catalyst content - calculated as metal - is less than 5 ppm (based on the total mixture),
   - the SiH group content is from 0.05 to 0.8 mmol/g (based on the total mixture),
   - organopolysiloxanes having a vinyl content of 0.5 to 11.6 mmol/g are employed as inhibitors,
   - the specific gravity of the curable compositions is less than 1.0 and
   - the compositions optionally additionally contain branched, saturated hydrocarbons with 15-50 C atoms,

   are introduced into an appropriate mould, the composition is left to cure at temperatures of 20°C to 150°C and then optionally subjected to an after-treatment known per se.

2. Contact optical articles produced according to Claim 1.

3. Contact lenses produced according to Claim 1.

4. Scleral lenses produced according to Claim 1.

5. Intraocular lenses produced according to Claim 1.

## Revendications

**Revendications pour les Etats contractants suivants : AT, BE, CH, LI, DE, FR, GB, GR, IT, LU, NL, SE**

1. Compositions de siloxanes optiquement claires, durcissables en élastomères, contenant
   a) des polydiméthylsiloxanes à terminaison vinylique de chaîne, ayant une viscosité d'environ 200 à 100 000 mPa.s (à 20°C), portant deux ou plus de deux groupes vinyle par molécule,
   b) le cas échéant des organopolysiloxanes dépourvus de groupes réactifs,
   c) des organopolysiloxanes portant deux ou plus de deux groupes SiH dans la molécule,
   d) un catalyseur,
   e) un inhibiteur ainsi que le cas échéant d'autres additifs et substances auxiliaires,
   caractérisées par le fait
   - qu'elles contiennent en outre une résine QM de bas poids moléculaire, contenant des groupes vinyle et éthoxy, donnant une solution homogène dans a), qui possède une teneur en groupes vinyle de 0,5 à 8 mmoles/g, qui est constituée de motifs $SiO_{4/2}$, $RO_{1/2}$ et $R_3SiO_{1/2}$ où R est un groupe méthyle, vinyle, phényle ou éthyle et présente une teneur en groupes éthoxy de 0,2 à 3 mmoles/g, qui est contenue dans le produit final en proportion de 1 à 10 % en poids et qui a une viscosité de 150 à 1500 mPa.s,
   - en ce que la teneur en catalyseur - exprimée en métal - s'élève à moins de 5 ppm (par rapport au mélange total),
   - en ce que la teneur en groupes SiH va de 0,05 à 0,8 mmole/g (par rapport au mélange total),
   - en ce qu'on utilise comme inhibiteurs des organopolysiloxanes contenant 0,5 à 11,6 mmoles de groupes vinyle par gramme,
   - en ce que leur densité est inférieure à 1,0, et
   - en ce qu'elles contiennent en outre le cas échéant des hydrocarbures saturés ramifiés ayant 15 à 50 atomes de carbone.

2. Composition suivant la revendication 1, caractérisée en ce que la teneur en résine QM est de 1,5 à 5 % en poids.

3. Composition suivant les revendications 1 et 2, caractérisée en que la teneur en SiH s'élève à 0,1-0,5 mmole/g.

4. Objets pour l'optique de contact, fabriqués à partir de compositions suivant les revendications 1 à 3.

5. Lentilles de contact, fabriquées à partir de compositions suivant les revendications 1 à 3.

6. Lentilles sclérales, fabriquées à partir de compositions suivant les revendications 1 à 3.

7. Lentilles intra-oculaires, fabriquées à partir de compositions suivant les revendications 1 à 3.

8. Utilisation des compositions suivant les revendications 1 à 3 pour la fabrication d'objets pour l'optique de contact.

9. Procédé de fabrication d'objets pour l'optique de contact, caractérisé en ce qu'on donne à des compositions suivant les revendications 1 à 3 une configuration correspondante, on fait durcir la composition à des températures de 20 à 150°C puis on la soumet le cas échéant à un post-traitement connu.

**Revendications pour l'Etat contractant suivant : ES**

1. Procédé de fabrication d'objets pour l'optique de contact, caractérisé en ce qu'on donne une configuration correspondante à des compositions de siloxanes optiquement claires, durcissables en élastomères, contenant
   a) des polydiméthylsiloxanes à terminaison vinylique de chaîne, ayant une viscosité d'environ 200 à 100 000 mPa.s (à 20°C), portant deux ou plus de deux groupes vinyle par molécule,
   b) le cas échéant des organopolysiloxanes dépourvus de groupes réactifs,
   c) des organopolysiloxanes portant deux ou plus de deux groupes SiH dans la molécule,
   d) un catalyseur,

e) un inhibiteur ainsi que le cas échéant d'autres additifs et substances auxiliaires,
caractérisées par le fait

- qu'elles contiennent en outre une résine QM de bas poids moléculaire, contenant des groupes vinyle et éthoxy, donnant une solution homogène dans a), qui possède une teneur en groupes vinyle de 0,5 à 8 mmoles/g, qui est constituée de motifs $SiO_{4/2}$, $RO_{1/2}$ et $R_3SiO_{1/2}$ où R est un groupe méthyle, vinyle, phényle ou éthyle et présente une teneur en groupes éthoxy de 0,2 à 3 mmoles/g, qui est contenue dans le produit final en proportion de 1 à 10 % en poids et qui a une viscosité de 150 à 1500 mPa.s,
- en ce que la teneur en catalyseur - exprimée en métal - s'élève à moins de 5 ppm (par rapport au mélange total),
- en ce que la teneur en groupes SiH va de 0,05 à 0,8 mmole/g (par rapport au mélange total),
- en ce qu'on utilise comme inhibiteurs des organopolysiloxanes contenant 0,5 à 11,6 mmoles de groupes vinyle par gramme,
- en ce que leur densité est inférieure à 1,0, et
- en ce qu'elles contiennent en outre le cas échéant des hydrocarbures saturés ramifiés ayant 15 à 50 atomes de carbone,

  on fait durcir la composition à des températures de 20 à 150°C puis on la soumet le cas échéant à un post-traitement connu.

**2.** Objets pour l'optique de contact fabriqués suivant la revendication 1.

**3.** Lentilles de contact fabriquées suivant la revendication 1.

**4.** Lentilles sclérales fabriquées suivant la revendication 1.

**5.** Lentilles intra-oculaires fabriquées suivant la revendication 1.